# EUROPÄISCHE PATENTSCHRIFT

(11) **EP 1 425 872 B1**
(45) Veröffentlichungstag und Bekanntmachung des Hinweises auf die Patenterteilung: **10.01.2007**
(21) Anmeldenummer: 02774363.2
(22) Anmeldetag: 13.09.2002
(51) Int. Cl.: H04L 1/22, H04L 29/14, H04J 3/08

(54) **Verfahren und Kommunikationseinrichtung zur Realisierung zumindest einer ausfallsicheren Kommunikationsbeziehung**
Method and communication system for establishing a least one fail safe communication link
Procédé et système de communication permettant d'établir au moins une liaison de communication à securité integrée

(30) Priorität: 14.09.2001 DE 10145493; 24.10.2001 DE 10152339
(43) Veröffentlichungstag der Anmeldung: 09.06.2004
(73) Patentinhaber: SIEMENS AKTIENGESELLSCHAFT, 80333 München (DE)
(72) Erfinder: BOLL, Norbert, 81245 München (DE); FROEHLER, Josef, 82065 Baierbrunn (DE); HEIN, Georg, 81243 München (DE); KOLSCH, Reiner, 84424 Isen (DE)
(86) Internationale Anmeldenummer: PCT/DE2002/003442
(87) Internationale Veröffentlichungsnummer: WO 2003/026192

(56) Entgegenhaltungen:
- EP-A- 1 128 584
- DE-A- 19 831 562
- US-A- 5 323 144
- SPIESS K ET AL: "ERHÖHTE BETRIEBSSICHERHEIT VON 2-MBIT/S-ÜBERTRAGUNGSSTRECKEN" Mai 1985 (1985-05) , TELCOM REPORT, SIEMENS AG. MUNCHEN, DE, VOL. 8, NR. 3, PAGE(S) 208-213 XP002125586 ISSN: 0344-4724 das ganze Dokument

## Beschreibung

Verfahren und Kommunikationseinrichtung zur Realisierung zumindest einer ausfallsicheren Kommunikationsbeziehung durch eine in einem Kommunikationsnetz angeordnete Kommunikationseinrichtung.

In aktuellen Kommunikationsnetzen bzw. Kommunikationssystemen erfordern erhöhte Datenmenge, höhere Anforderungen an Ausfallsicherheit und die Anschaltung einer größeren Anzahl von Teilnehmern an Kommunikationseinrichtungen die Realisierung von Ersatzschaltemechanismen, um bei Hardware- oder Leitungsausfällen die Funktionen innerhalb eines Kommunikationsnetzes aufrecht erhalten zu können.

In DE 198 31 562 ist beispielsweise das Prinzip der Leitungsredundanz in gemäß der Synchronen Digitalen Hierarchie ausgestalteten Kommunikationsnetzen bzw. in Sonet-Übertragungsnetzen offenbart, wobei mit Hilfe der Leitungsredundanz der auf den Leitungen zu übertragende Datenverkehr vor Ausfall geschützt werden soll. Dabei wird durch eine zweite Leitung ein redundanter Übertragungsweg zur Verfügung gestellt, der im Fehlerfall den Datenverkehr der ursprünglich benutzten Datenleitung übernehmen kann. Weit verbreitet ist die sogenannte 1 + 1-Leitungsredundanz, bei der am sendenden Ende der Übertragungsstrecke der zu übertragende Verkehr über eine sogenannte Bridge auf beide Leitungen annähernd gleichzeitig gesendet werden kann und am empfangenen Ende über einen sogenannten "Selektor" der Datenverkehr von einer der beiden Leitungen zur weiteren Verarbeitung ausgewählt werden kann.

Das Dokument EP1128546 offenbart eine Vorrichtung mit mehreren redundanten Anschlußeinheiten und mehreren redundanten Übertragungsleitungen die im Falle eines Ausfalles einer Anschlußeinheit eine Ersatzschaltung ermöglichen. Eine Umschaltung zwischen eine Anschlußeinheit und einem zu ihr redundanten Anschlußeinheit erfolgt durch die Kontrollsteuerung der Zentralsteuerungeinheit.

Neben dem Schutz des Datenverkehrs auf der Übertragungsleitung müssen auch die Funktionen der, in der jeweiligen Kommunikationseinrichtung angeordneten Schnittstellenbaugruppe vor Ausfall geschützt werden. Im Rahmen einer Baugruppenredundanz wird eine zweite Baugruppe zur Verfügung gestellt und der ersten Baugruppe zugeordnet, die im Fehlerfall die Funktionen der ursprünglich benutzten Baugruppe übernehmen kann.

Leitungs- und Baugruppenredundanz können gemäß oben genannter Offenlegungsschrift kombiniert werden. Dabei wird die Ersatzschaltung der Datenleitung und der Schnittstellenbaugruppe miteinander gekoppelt. Ein Ersatzschalten der Leitung führt automatisch zum Ersatzschalten der Schnittstellbaugruppe und umgekehrt. Dieses Verfahren wird insbesondere in großen Kommunikationseinrichtungen angewendet, die mit einer größeren Anzahl von Übertragungsleitungen beschaltet sind. Diese Kommunikationseinrichtungen verfügen neben den Schnittstellenbaugruppen über Baugruppen, die zentrale Funktionen der Kommunikationseinrichtung wahrnehmen, wie z.B. Vermittlungsfunktionen oder zentrale Steuerfunktionen. Diese Baugruppen können ebenfalls mit Baugruppenredundanz vor Ausfall gesichert sein. Die Baugruppenredundanz der zentralen Baugruppen ist aber nicht mit der Baugruppenredundanz der Schnittstellenbaugruppe oder der Leitungsredundanz gekoppelt.

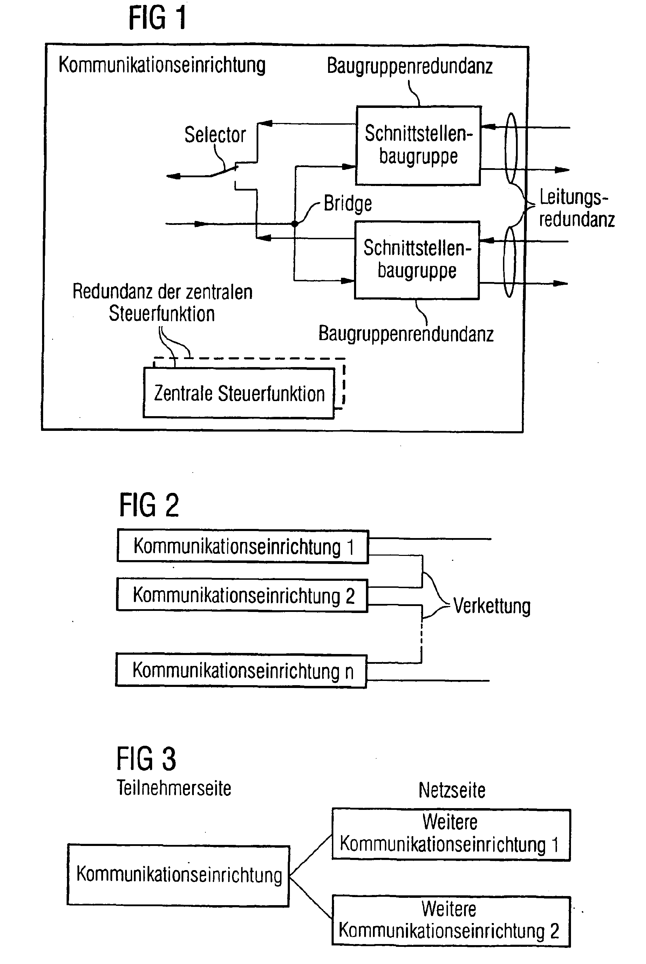

FIG 1 zeigt in einem Blockschaltbild eine Kommunikationseinrichtung, in der Leitungs- und Baugruppenredundanz implementiert sind. Die Leitungsredundanz und die Baugruppenredundanz der Schnittstellenbaugruppe sind miteinander gekoppelt. Der von der Kommunikationseinrichtung abgehende Datenstrom wird mittels einer Bridge über beide Schnittstellenbaugruppen auf beide abgehende Leitungen geführt, während aus dem über die Schnittstellenbaugruppe geführten ankommenden Datenströmen mittels des Selektors ein in der Kommunikationseinrichtung weiter zu verarbeitender Datenstrom ausgewählt wird. Die zentrale Steuerfunktion dieser Kommunikationseinrichtung ist von den Schnittstellenbaugruppen und Leitungen getrennt ausgeführt, kann aber ebenfalls redundant vorhanden sein. Bei einer Ersatzschaltung der Leitungen und der Schnittstellenbaugruppen wird die zentrale Steuerfunktion nicht umgeschaltet. Bei einer Ersatzschaltung der zentralen Steuerfunktion sind Leitungen und Schnittstellenbaugruppen nicht betroffen. Entsprechendes gilt für weitere, in der Kommunikationseinrichtung jeweils realisierte zentrale Funktionen, wie etwa die Vermittlungsfunktion.

In kleineren Kommunikationseinrichtungen, wie sie z.B. in Teilnehmeranschlussnetzen zu finden sind, muss einerseits aus Kostengründen eine hohe Integration innerhalb der Kommunikationseinrichtung erreicht werden und andererseits aber auch Redundanz zum Schutz der immer größer werdenden Datenmengen und Teilnehmerzahlen sowie zur Verbesserung der Ausfallsicherheit vorgesehen werden.

Die hohe Integration führt neben dem Erhöhen der an eine Teilnehmerbaugruppe anschließbaren Teilnehmerzahlen auch zur Integration von zentralen Funktionen der Kommunikationseinrichtung mit von vielen Teilnehmern gemeinsam genutzten zentralen Übertragungsschnittstellen.

Darüber hinaus können mehrere dieser Kommunikationseinrichtungen in einer Kette miteinander verbunden werden, damit auf der Seite des zentralen Kommunikationsnetzes nur eine statt mehrerer Übertragungsleitungen genutzt werden muss. Die zur Verkettung benutze Übertragungsleitung ist dabei ebenfalls redundant ausgeführt - siehe FIG 2. Die Übertragungsschnittstelle wird aus Kostengründen zusammen mit der zum zentralen Kommunikationsnetz führenden Übertragungsschnittstelle und zentralen Funktionen der Kommunikationseinrichtung auf einer Baugruppe integriert.

Durch das Zusammenfassen von zentralen Funktionen und zentralen Übertragungsschnittstellen auf einer Baugruppe bzw. Schnittstellenbaugruppe können die Leitungsredundanz der Übertragungsleitungen und die Baugruppenredundanz der gemeinsamen Baugruppen nicht mehr wie bisher miteinander gekoppelt werden. Auch die Leitungsredundanzen der zum zentralen Kommunikationsnetz führenden Übertragungsleitung und der zur Verkettung benutzten Übertragungsleitung dürfen nicht miteinander gekoppelt sein. Dies würde nachteilig dazu führen, dass bei Leitungsersatzschaltung der zum zentralen Kommunikationsnetz führenden Übertragungsleitung auch zentrale Funktionen der Kommunikationseinrichtung, insbesondere die zentrale Steuerfunktion, sowie die zur Verkettung genutzte Übertragungsleitung umgeschaltet werden müssten. Ebenso nachteilig müssten bei einer Leitungsersatzschaltung in einem Abschnitt einer Kette von Kommunikationseinrichtungen alle Abschnitte dieser Kette, sowie die zentralen Funktionen der an dieser Kette zusammengeführten Kommunikationseinrichtungen umgeschaltet werden.

Somit liegt der Erfindung die Aufgabe zugrunde, eine Leitungs- und Baugruppenredundanz für eine Kommunikationseinrichtung zu realisieren, bei der die Übertragungsschnittstelle der Übertragungsleitung und die zentralen Steuerfunktionen auf einer Baugruppe bzw. Anschlusseinheit integriert sind. Die Aufgabe wird ausgehend von bei einem Verfahren und einer Kommunikationseinrichtung gemäß den Oberbegriffen der Patentansprüche 1 und 9 durch deren kennzeichnende Merkmale gelöst.

Beim erfindungsgemäßen Verfahren zur Realisierung zumindest einer ausfallsicheren Kommunikationsbeziehung durch eine in einem Kommunikationsnetz angeordnete Kommunikationseinrichtung sind mehrere in der Kommunikationseinrichtung angeordnete und einander zugeordnete Anschlusseinheiten vorgesehen, an die jeweils eine von mehreren zur Realisierung der zumindest einen Kommunikationsbeziehung vorgesehenen, redundanten Übertragungsleitungen angeschlossen ist. Eine der zur Realisierung der zumindest einer Kommunikationsbeziehung vorgesehenen, redundanten Übertragungsleitungen und der damit verbundenen Anschlusseinheit werden kommunikationsbeziehungsspezifische Informationen übermittelt. In jeder der Anschlusseinheiten sind Steuerfunktionen zur Steuerung von zentral in der Kommunikationseinrichtung realisierten, kommunikationseinrichtungspezifischen Funktionen und/oder von in der jeweiligen Anschlusseinheit realisierten anschlusseinheitspezifischen Funktionen vorgesehen.

Der wesentliche Aspekt des erfindungsgemäßen Verfahrens besteht darin, dass bei Ausfall zumindest eines Teils der Steuerfunktionen in einer der Anschlusseinheiten zumindest die ausgefallenen kommunikationseinrichtungspezifischen und/oder anschlusseinheitspezifischen Funktionen durch die Steuerfunktionen der zumindest eine zugeordnete Anschlusseinheit gesteuert werden.

Der wesentliche Vorteil des erfindungsgemäßen Verfahrens besteht darin, dass in Kommunikationsnetzen bzw. Kommunikationseinrichtungen, welche beispielsweise im Teilnehmeranschlussbereich angeordnet sind - auch als Digital Subscriber Line Access Multiplexer DSLAM bezeichnet - auf kostengünstige Weise ausfallsichere Ubertragungsschnittstellen zum zentralen Kommunikationsnetz und zentrale Funktionen der Kommunikationseinrichtungen auf einer Baugruppe bzw. Anschlusseinheit integrierbar sind. Die zentralen Funktionen können Steuerfunktionen, Vermittlungsfunktionen, Takt- und Synchronisiereinrichtungen, Managementschnittstellen usw. oder Teilfunktionen einer oder mehrerer dieser Funktionen umfassen.

Das erfindungsgemäße Verfahren kombiniert in vorteilhafter Weise die Leitungsredundanz für ein oder mehrere Übertragungsleitungen mit einer Baugruppenredundanz für eine zentrale Baugruppe bzw. Anschlusseinheit, die sowohl die Schnittstellenfunktionen als auch zentrale Steuerfunktionen der Kommunikationseinrichtung enthält. Dabei bleibt die Leitungsredundanz der Schnittstellen unabhängig voneinander und eine Ersatzschaltung einer Übertagungsleitung bzw. Übertragungsschnittstelle führt auch nicht führt auch nicht zum Ersatzschalten der Baugruppe bzw. Anschlusseinheit. Das Ersatzschalten der zentralen Funktionen bzw. der Baugruppe kann zum Ersatzschalten der daran angeschlossenen Übertragungsleitungen führen. Daraus ergeben sich folgende Vorteile:
- kostengünstige Realisierung von Baugruppen- und Leitungsredundanz, da Übertragungsschnittstellen- und zentrale Funktionen auf einer Baugruppe integriert sind.
- Geringe Fehlerwirkbreite im Kommunikationsnetz, da trotz Integration einer Übertragungsschnittstelle und der zentralen Steuerfunktion auf einer Baugruppe ein Ausfall einer Übertragungsleitung nicht zusätzlich zur Ersatzschaltung der Baugruppe bzw. der Anschlusseinheit einschließlich der zentralen Steuerfunktion und damit zu zusätzlichen Ausfallzeiten führt.
- Geringe Fehlerwirkbreite im Kommunikationsnetz, da sich trotz Integration mehrerer Übertragungsschnittstellen auf einer Baugruppe ein Leitungsausfall einer Übertragungsleitung nicht über die Baugruppenredundanz auf weitere Übertragungsleitungen auswirkt. Weitere vorteilhafte Ausgestaltungen des erfindungsgemäßen Verfahrens sowie eine Kommunikationseinrichtung zur Realisierung zumindest einer ausfallsicheren Kommunikationsbeziehung sind den weiteren Ansprüchen zu entnehmen.

Im folgenden wird das erfindungsgemäße Verfahren anhand mehrerer Zeichnungen näher erläutert. Dabei zeigen:
- FIG 1: schematisch eine Kommunikationseinrichtung, in der Leitungs- und Baugruppenredundanz implementiert sind,
- FIG 2: die Hintereinanderschaltung mehrerer Kommunikationseinrichtungen zu einer Kette,
- FIG 3: einen netzseitigen Anschluss der Kommunikationseinrichtung an eine oder mehrere weitere Kommunikationseinrichtungen,
- FIG 4: eine Kommunikationseinrichtung, in der erfindungsgemäß die Leitungs- und Baugruppenredundanz unabhängig voneinander implementiert sind,
- FIG 5-7: beispielhaft die Ersatzschaltung einer Ubertragungsleitung im Falle eines Leitungsfehlers und die Ersatzschaltung einer Baugruppe im Falle einer schaltungstechnischen Fehlers sowie deren Auswirkungen auf die übrigen redundanten Funktionen.

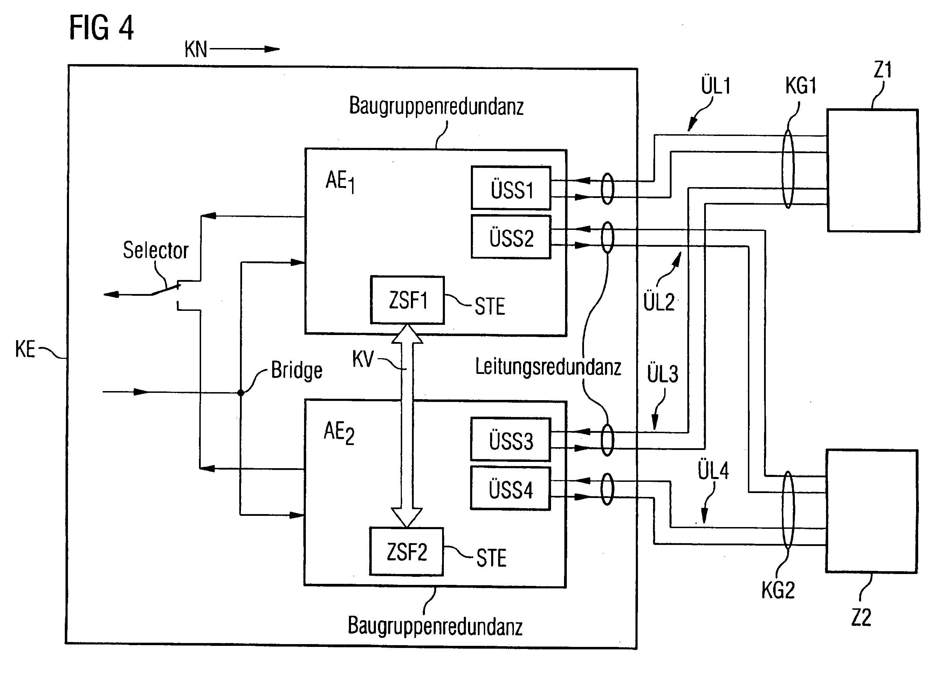

FIG 4 zeigt in einem Blockschaltbild eine in einem Kommunikationsnetz, beispielsweise einem SDH-Kommunikationsnetz, angeordnete Kommunikationseinrichtung KE, bei der die erfindungsgemäße Unabhängigkeit von Leitungs- und Baugruppenredundanz erfüllt ist. Die jeweils im Rahmen einer ausfallsicheren Kommunikationsbeziehung kb1, 2 vorgesehenen, redundant zugeführten Übertragungsleitungen ÜL1, ÜL3, bzw. ÜL2, ÜL4 werden an redundant ausgeführte Übertragungsschnittstellen ÜSS1...4 angeschlossen, wobei diese redundant ausgeführten Übertragungsschnittstellen ÜSS1...4 auf unterschiedlichen zentralen Baugruppen bzw. Anschlusseinheiten AE1, 2 angeordnet sind. Die Übertragungsleitungen ÜL1, ÜL3 bzw. ÜL2, ÜL4 bilden dabei hinsichtlich der Leitungsredundanz und hinsichtlich der jeweils zu realisierenden Kommunikationsbeziehung kb1,2 ein Paar.

Für das weitere Ausführungsbeispiel sei angenommen, daß die erste und dritte Übertragungsleitung ÜL1,2 an eine erste weitere Kommunikationseinrichtung Z1 und die zweite und vierte Übertragungsleitung ÜL2,4 an eine zweite weitere Kommunikationseinrichtung Z2 angeschlossen ist - in FIG 4 dargestellt.

Des Weiteren sind in der Kommunikationseinrichtung KE redundant ausgeführte zentrale Steuerfunktionen zsf1 bzw. zsf2 realisiert, wobei diese redundant ausgeführten Steuerfunktionen zsf1, 2 ebenfalls auf den unterschiedlichen zentralen Anschlusseinheiten AE1, 2 angeordnet sind. Diese zentralen Steuerfunktionen zsf1, zsf2 werden von einer Steuereinheit STE bzw. von einem Prozessor ausgeführt, der darüber hinaus auch lokale Steuerfunktionen auf der jeweiligen Anschlusseinheit AE1, 2 ausführen kann, wie z.B. Steuerfunktionen für die Übertragungsschnittstellen ÜSS1, 2 bzw. ÜSS3, 4. Die zentralen Steuerfunktionen zsf1, 2 sind über eine Kommunikationsverbindung KV miteinander verbunden, über die der Ablauf der Ersatzschaltung koordiniert werden kann und über die zentralen Steuerfunktionen zsf1, 2 miteinander synchronisiert werden können. Die Kommunikationsverbindung KV enthält sowohl hardwaredominante Anteile für zeitkritische Ersatzschalteprozeduren und für Ersatzschaltefälle, in denen eine softwaregesteuerte Umschaltung nicht mehr möglich ist, als auch softwaredominierte Anteile für weniger zeitkritische Abläufe.

Bei der in FIG 4 dargestellten Kommunikationseinrichtung ist die Existenz einer Bridge- und einer Selektorfunktion, die hier als bekannt vorausgesetzt werden, ebenfalls angedeutet, ohne dass deren Anordnung oder Ausführung innerhalb der Kommunikationseinrichtung näher beschrieben sein soll.

Die teilnehmerseitigen Schnittstellen der Kommunikationseinrichtung, wie beispielsweise xDSL-Schnittstellen oder weitere zur Kaskadierung genutzte Ubertragungsschnittstellen sind wesentliche Bestandteile der Kommunikationseinrichtung, welche in FIG 4 nicht dargestellt sind.

Die erfindungsgemäße, in FIG 4 dargestellte Redundanzarchitektur ist nicht abhängig von der Realisierung der zentralen Vermittlungsfunktion der Kommunikationseinrichtung. Diese Redundanzarchitektur kann beispielsweise zusammen mit einer Bus-basierten Vermittlungsarchitektur, einer Koppelnetzbasierten oder einer sternförmig angedeuteten seriellen Schnittstellen-basierten Vermittlungsarchitektur realisiert werden. Die Vermittlungsarchitektur kann selbst ebenfalls redundant aufgebaut sein und es können Teile dieser Vermittlungsarchitektur auf den zentralen Anschlusseinheiten AE1 bzw. AE2 integriert sein.

Die Verbindung der Kommunikationseinrichtung mit einem TMN-System (TMN: telecommunication management network) kann über eine sogenannte "Imband-Verbindung" erfolgen. Dabei wird die Verbindung zum TMN-System zusammen mit dem übrigen Verkehr im Rahmen einer "Imband-Verbindung" auf dem Übertragungsleitungen geführt. Sie kann auch gemäß einer "Outband-Verbindung" realisiert sein, wobei die Kommunikationseinrichtung über separate Schnittstellen, beispielsweise einer Ethernet-Schnittstelle, mit dem TMN-System verbunden ist. Beide Möglichkeiten können mit Hilfe des erfindungsgemäßen Verfahrens bzw. mit der erfindungsgemäßen Redundanzarchitektur realisiert werden.

Die zentrale Taktgeneratorfunktion für die Kommunikationseinrichtung kann ebenfalls auf dem zentralen Anschlusseinheiten AE1, 2 integriert sein.

Eine Ersatzschaltung im Sinne der Leitungsredundanz kann bei einem Ausfall einer Übertragungsleitung ÜL1...4 stattfinden. Eine Ersatzschaltung im Sinne der Baugruppenredundanz kann bei einem Fehler der Hardware oder Teilen der Hardware einer Anschlusseinheit BG1, 2 oder bei einem nicht reparierbaren Softwarefehler in der zentralen Steuerfunktion zsf1, 2 stattfinden. Die Redundanz der zentralen Steuerfunktion zsf1, 2 ist somit Bestandteil der Baugruppenredundanz. Ein Hardwarefehler auf einer Baugruppe bzw. Anschlusseinheit AE1, 2 kann auch ein Fehler in der Hardware einer Übertragungsschnittstelle ÜSS1...4 sein.

Erfindungsgemäß ist es möglich, bei einem Fehler, der eindeutig der zentralen Steuerfunktion zuzuordnen ist, die Ersatzschaltung der zentralen Steuerfunktion zsf1, 2 ohne gleichzeitige Ersatzschaltung der Baugruppe bzw. Anschlusseinheit AE1, 2 durchzuführen. Die Ersatzschaltung der Übertragungsleitung ÜL1...4 als Folge der Ersatzschaltung der zentralen Steuerfunktion einer Anschlusseinheit AE1, 2 kann hier vorteilhaft vermieden werden. Dabei darf der Fehler der zentralen Steuerfunktion zsf1, 2 jedoch nicht die zur Ersatzschaltung der zentralen Steuerfunktion zsf1, 2 erforderlichen Funktionen beeinträchtigen. Zum Austausch der defekten Baugruppe bzw. Anschlusseinheit AE1, 2 kann später trotzdem die Ersatzschaltung der Anschlusseinheit AE1, 2 erforderlich sein.

Bei einer Aktualisierung der Software für die zentrale Steuerfunktion einer Anschlusseinheit AE1, 2 kann die Unabhängigkeit von Leitungs- und Baugruppenredundanz vorteilhaft ausgenutzt werden, in dem zunächst eine erste zentrale Steuerfunktion zsf1, 2 mit neuer Software aktualisiert bzw. geladen wird, während die andere, die aktive Funktion der Steuerung der Kommunikationseinrichtung KE übernimmt. Nach erfolgter Aktualisierung der ersten zentralen Steuerfunktion zsf1 kann eine Umschaltung der zentralen Steuerfunktion erfolgen und die zweite zentrale Steuerfunktion zsf2 mit neuer Software geladen bzw. aktualisiert werden, während die erste zentrale Steuerfunktion zsf1 die aktive Funktion der Steuerung der Kommunikationseinrichtung KE übernimmt. Eine Umschaltung der jeweils an eine Anschlusseinheit AE1, 2 angeschlossenen Übertragungsleitungen ÜL1, 2 bzw. ÜL3, 4 ist dabei nicht erforderlich.

Die zentrale Steuerfunktion zsf1, 2 kann z.B. zu Testzwecken mit einem manuellen Umschaltebefehl umgeschalten werden. Hierbei ist eine Umschaltung der übertragungsleitungen ÜL1, 2 bzw. ÜL3, 4 ebenfalls nicht erforderlich.

Bei der Ersatzschaltung einer Übertragungsleitung (Leitungsredundanz) wird der über diese Übertragungsleitung übermittelte Datenverkehr mittels der Bridge- und Selektorfunktion der Kommunikationseinrichtung KE auf die redundante Übertragungsleitung ÜL1...4 umgeschaltet. Der Datenverkehr der an die zweite Übertragungsschnittstelle ÜSS1...4 angeschlossenen Leitung wird dabei keiner Umschaltung unterzogen. Diese Leitung bleibt im gleichen Zustand wie vor der Umschaltung der ersten Leitung. Die Umschaltung einer Übertragungsleitung führt nicht zu einer Umschaltung der zentralen Steuerfunktion zsf1,2.

Bei der Ersatzschaltung der Anschlusseinheit bzw. Baugruppe AE1, 2 (Baugruppenredundanz) werden alle Funktionen der Baugruppe auf die redundante Baugruppe übertragen. Diese Funktionen beinhalten auf die Funktionen der Übertragungsschnittstellen ÜSS1, 2 bzw. ÜSS3, 4. Übertragungsleitungen, deren Datenverkehr über die Ersatz zu schaltende Baugruppe geführt wird, müssen im Zuge der Ersatzschaltung der Baugruppe ebenfalls umgeschaltet werden.

Erfindungsgemäß haben die im Rahmen der Leitungsredundanz durchzuführenden Maßnahmen keine Auswirkungen auf eine jeweils andere an die jeweilige Anschlusseinheit AE1, 2 angeschlossenen Übertragungsleitung. Des Weiteren haben die im Rahmen der Leitungsredundanz durchzuführenden Maßnahmen keine Auswirkungen auf die Baugruppenredundanz. Maßnahmen der Baugruppenredundanz können aber Maßnahmen der Leitungsredundanz beinhalten. Ferner kann die zentrale Steuerfunktion zsf1, 2 einer Anschlusseinheit AE1, 2 unabhängig von der Leitungsredundanz und der Baugruppenredundanz umgeschaltet werden. Im folgenden soll anhand zweier Ausführungsbeispiele die Ersatzschaltung einer Übertragungsleitung üL1...4 im Falle eines Leitungsfehlers und die Ersatzschaltung einer Baugruppe bzw. Anschlusseinheit AE1, 2 im Falle eines Hardwarefehlers auf der Anschlusseinheit AE1, 2 sowie deren Auswirkung auf die übrigen redundanten Funktionen verdeutlicht werden.

Im folgenden soll der Zustand, bei welchen über eine Übertragungsleitung ÜL1...4 der aktive durch den Selektor ausgewählte Verkehr übertragen wird, mit dem Betriebszustand "aktiv" bezeichnet werden. Die redundante Leitung ÜL1...4 hat in diesem Fall den Betriebszustand "standby". Die aktive zentrale Steuerfunktion zsf1, 2 sei ebenfalls mit dem Zustand "aktiv" beschrieben, während die redundante Steuerfunktion zsf1, 2 mit dem Betriebszustand "standby" beschrieben werden soll.

### Beispiel 1: Leitungsersatzschaltung

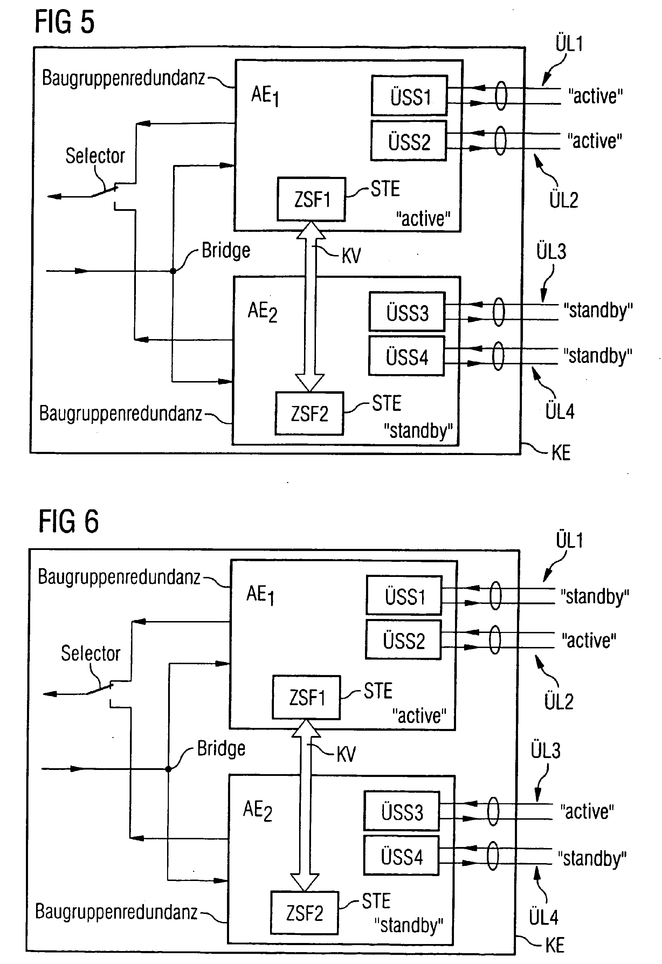

Im Ausgangszustand zeigen, wie in FIG 5 dargestellt, die Übertragungsleitungen ÜL1 und ÜL2 sowie die zentrale Anschlusseinheit AE1 im Zustand "aktiv". Die Übertragungsleitungen ÜL1...4 seien beispielsweise nach der synchronen digitalen Hierarchie (SDH) ausgestaltete STM-1- Übertragungsleitungen, wobei ÜL1 und ÜL2 im Sinne der SDH-/Sonet-Leitungsredundanz "working-Übertragungsleitungen" repräsentieren und die Übertragungsleitungen ÜL3 und ÜL4 "protection-Leitungen" repräsentieren. Auf den "protection-Leitungen" ÜL3, 4 läuft das Steuerprotokoll der SDH-/Sonet-Leitungsredundanz.

Ein Fehler auf der Übertragungsleitung ÜL1 mit dem Betriebszustand "aktiv" wird durch die auf der ersten Anschlusseinheit AE1 angeordnete Übertragungsschnittstelle ÜSS1 erkannt. Die in der zentralen Steuerfunktion zsf1 enthaltene lokale Steuerfunktion der Anschlusseinheit AE1 meldet diesen Fehler über die Kommunikationsverbindung KV an die in der zentralen Steuerfunktion zsf2 der zweiten Anschlusseinheit AE2 enthaltene lokale Steuerfunktion. Über die dritte Übertragungsleitung ÜL3 wird mit dem am anderen Ende der Übertragungsleitungen ÜL1 und ÜL3 angeschlossenen Gerät bzw. Kommunikationseinrichtung die Ersatzschaltung der Übertragungsleitungen über das Steuerprotokoll der SDH-/Sonet-Leitungsredundanz vereinbart und gesteuert. Innerhalb der Kommunikationseinrichtung KE wird der zwischen den teilnehmerseitigen Baugruppen - nicht dargestellt - und der ersten Übertragungsleitung ÜL1 übertragene Datenverkehr mittels Bridge und Selektor auf die Übertragungsleitung ÜL3 umgeschaltet. Auch der zwischen der zweiten Übertragungsleitung ÜL2 und der ersten Übertragungsleitung ÜL1 übertragene Datenverkehr wird mittels Bridge und Selektor auf eine Verbindung zwischen der zweiten und dritten Übertragungsleitung ÜL2 und ÜL3 umgeschaltet. Erfindungsgemäß findet eine Ersatzschaltung der Baugruppen nicht statt. Nach Durchführung der Leitungsersatzschaltung - dieser Zustand ist in Figur 6 dargestellt - sind die Übertragungsleitungen ÜL3 und ÜL2 sowie die Anschlusseinheit AE1 im Zustand "aktiv". Die Übertragungsleitungen ÜL2 und ÜL4, sowie die erste Anschlusseinheit AE1 wurde nicht Ersatzgeschaltet.

### Beispiel 2: Baugruppenersatzschaltung

Im Ausgangszustand seien, wie in Figur 6 dargestellt, die Übertragungsleitungen ÜL3 und ÜL2 sowie die erste Anschlusseinheit AE1 im Zustand "aktiv". Des Weiteren ist die in der ersten Anschlusseinheit AE1 angeordnete zentrale Steuerfunktion zsf1 im Zustand "aktiv". Des Weiteren seien die in Beispiel 1 genannten Voraussetzungen auch in diesem Ausführungsbeispiel gültig.

Die in der zentralen Steuerfunktion zsf1 enthaltene lokale Steuerfunktion der ersten Anschlusseinheit AE1 erkennt einen Hardwarefehler auf der ersten Anschlusseinheit AE1 und meldet diesen an die zentrale Steuerfunktion zsf1. Die zentrale Steuerfunktion zsf1 übermittelt entsprechende Informationen über den Hardwarefehler über die Kommunikationsverbindung KV an die in der zweiten Anschlusseinheit AE2 angeordnete zentrale Steuerfunktion zsf2. Mit Hilfe der übermittelten Informationen wird der in der zweiten Anschlusseinheit AE2 angeordneten, zentralen Steuerfunktion zsf2 mitgeteilt, dass eine Baugruppenersatzschaltung stattfinden muss, worauf die zentrale Steuerfunktion zsf2 die Ersatzschaltung durchführt. Abhängig von den Auswirkungen des Hardwarefehlers auf der zentralen Anschlusseinheit AE1 kann vor der Baugruppenersatzschaltung noch eine kontrollierte Leitungsersatzschaltung für die Übertragungsleitungen ÜL2 und ÜL4 durchgeführt werden.

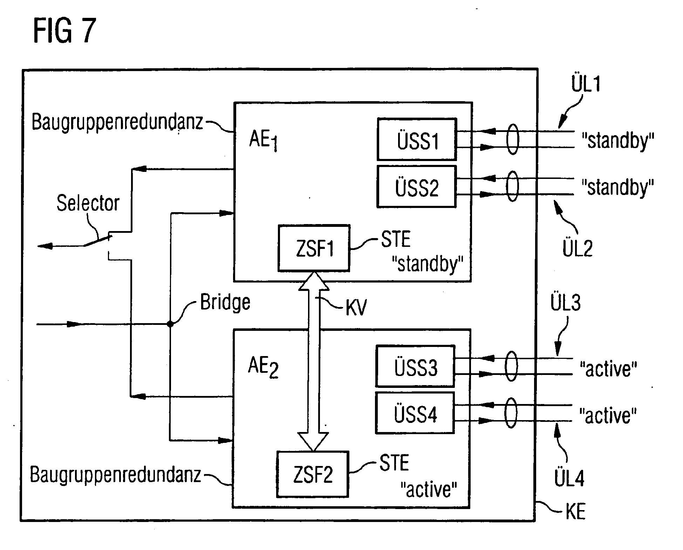

Nach Durchführung der Baugruppen Ersatzschaltung - in FIG 7 dargestellt - sind die Übertragungsleitungen ÜL3 und ÜL4 sowie die zweite Anschlusseinheit AE2 im Zustand "aktiv". Die Übertragungsleitungen ÜL2 und ÜL4 mussten im Rahmen der Baugruppenersatzschaltung ebenfalls umgeschaltet werden, während sich die Übertragungsleitungen ÜL1 und ÜL3 bereits in einem Zustand befanden, der bei Baugruppenersatzschaltung nicht zur Leitungsersatzschaltung führt.

Im Folgenden seien die Hardware-dominierten Anteile der in den Ausführungsbeispielen genannten Kommunikationsverbindung KV zwischen der ersten und zweiten Anschlusseinheit AE1, AE2 genauer erläutert. Folgende Funktionen sollen über Hardwarebasierte Schnittstellen zwischen den Anschlusseinheiten AE1 und AE2 bereitgestellt werden:

### Funktion 1:

Das Erkennen eines Defekts der Partner-Anschlusseinheit AE1, AE2, wobei auf der defekten Anschlusseinheit bzw. Baugruppe davon ausgegangen werden muss, dass deren zentrale Steuerfunktion zsf1, 2 oder Teile der zentralen Steuerfunktionen nicht mehr funktionsfähig sind.

### Funktion 2:

Das Erkennen des Vorhandenseins einer aktiven Redundanzbaugruppe bzw. Redundanzanschlusseinheit im laufenden bzw. aktiven System. Dies ist erforderlich, wenn beispielsweise nach einer Reparatur eine Partner-Baugruppe bzw. Partner-Anschlusseinheit der Kommunikationseinrichtung während des aktiven Betriebes zugesteckt wird. Anhand der Hardwarebasierten Schnittstelle kann die zugesteckte Anschlusseinheit schon vor Aktivierung Ihres Kommunikationsinterfaces zur aktiven Partnerbaugruppe bzw. Partner-Anschlusseinheit erkennen, ob zentrale Systemressourcen bzw. Systemschnittstellen auf der zugesteckten Anschlusseinheit aktiviert werden dürfen.

### Funktion 3:

Das Deaktivieren von externen Schnittstellen einer defekten Anschlusseinheit bzw. Baugruppe durch die redundante Partner-Baugruppe bzw. Partner-Anschlusseinheit. Die redundante, aktive Partner-Baugruppe bzw. Partner-Anschlusseinheit kann dabei vor dem Deaktivieren der externen Schnittstellen der Partner-Baugruppe bzw. Partner-Anschlusseinheit noch Diagnosefunktionen zur Fehlereingrenzung im System anstoßen. Durch das Deaktivieren der externen Schnittstellen einer defekten Baugruppe bzw. Anschlusseinheit kann unter bestimmten Fehlerquellen eine Isolation des Fehlerzustandes erreicht werden, so dass die Voraussetzungen für einen ungestörten oder eventuell eingeschränkten Ersatzschaltebetrieb durch die Partner-Baugruppe bzw. Partner-Anschlusseinheit möglich wird.

## Patentansprüche

1. Verfahren zur Realisierung zumindest einer ausfallsicheren Kommunikationsbeziehung (KG1,2) durch eine in einem Kommunikationsnetz (KN) angeordnete Kommunikationseinrichtung (KE), bei dem mehrere in der Kommunikationseinrichtung (KE) angeordnete und einander zugeordnete Anschlusseinheiten (AE1,2) vorgesehen sind, an die jeweils eine von mehreren zur Realisierung der zumindest einen Kommunikationsbeziehung (KG1,2) vorgesehenen, redundanten Übertragungsleitungen (UL1...4) angeschlossen ist, wobei über eine der jeweils zur Realisierung der zumindest einen Kommunikationsbeziehung (KG1) vorgesehen, redundanten Übertragungsleitungen (UL1) und der damit verbundenen Anschlusseinheit (AE1) kommunikationsbeziehungspezifische Informationen übermittelt werden, bei dem in jeder der Anschlusseinheiten (AE1,2) Steuerfunktionen (zsf1,2) zur Steuerung von zentral in der Kommunikationseinrichtung (KE) realisierten, kommunikationseinrichtungspezifischen Funktionen und von in der jeweiligen Anschlusseinheit realisierten anschlusseinheitspezifischen Funktionen vorgesehen sind,
**dadurch gekennzeichnet,**
**dass** die in den jeweils einander zugeordneten Anschlusseinheiten (AE1,2) vorgesehenen Steuertfunktionen (zsf1,2) zueinander redundant ausgeführt sind,
**dass** bei Ausfall zumindest eines Teils der Steuerfunktionen (zsf1,2) in einer der Anschlusseinheiten (AE1) zumindest die ausgefallenen kommunikationseinrichtungspezifischen und/oder anschlusseinheitspezifischen Funktionen durch die Steuerfunktionen (zsf1,2) der zumindest einen zugeordneten Anschlusseinheit (AE2) gesteuert werden, wobei die kommunikationsbeziehungsspezifischen Informationen weiterhin über die eine Übertragungsleitung (UL1) und der damit verbundenen Anschlusseinheit (AE1) übermittelt werden.

2. Verfahren nach Anspruch 1,
**dadurch gekennzeichnet,**
**daß** bei Ausfall der im Rahmen der zumindest einen Kommunikationsbeziehung (KG1,2) die Informationen übermittelnden Übertragungsleitung (UL1...4) die kommunikationsbeziehungspezifischen Informationen über eine der zumindest einen weiteren im Rahmen dieser Kommunikationsbeziehung (KG1,2) vorgesehenen, redundanten übertragungsleitung (UL1...4) und der damit verbundenen Anschlusseinheit (AE1,2) übermittelt werden.

3. Verfahren nach Anspruch 1 oder 2,
**dadurch gekennzeichnet,**
**daß** über die einander zugeordneten Anschlußeinheiten (AE1,2) und die daran angeschlossenen Übertragungsleitungen (UL1...4) die kommunikationsbeziehungsspezifischen Informationen von im Rahmen von mehreren annähernd gleichzeitig realisierten Kommunikationsbeziehungen (KG1,2) übermittelt werden.

4. Verfahren nach Anspruch 3,
**dadurch gekennzeichnet, daß** bei Ausfall zumindest eines Teils der anschlußeinheitspezifischen Funktionen in einer der Anschlußeinheiten (AE1,2) und/oder bei Störungen bei der Informationsübermittlung über eine der and diese Anschlußeinheit (AE1,2) angeschlossenen Übertragungsleitungen (UL1...4)
nur die bisher im Rahmen der gestörten Kommunikationsbeziehung (KG1,2) über diese Anschlußeinheit (AE1,2) und die daran angeschlossene Übertragungsleitung (UL1...4) übermittelten kommunikationsbeziehungsspezifischen Informationen über eine der zumindest einen weiteren im Rahmen dieser gestörten Kommunikationsbeziehung (KG1,2) vorgesehenen, redundanten Übertragungsleitung (UL1...4) und der damit verbundenen Anschlußeinheit (AE1,2) übermittelt werden.

5. Verfahren nach einem der vorherigen Ansprüche,
**dadurch gekennzeichnet,**
**daß** das Kommunikationsnetz (KN) und die Übertragungsleitungen (UL1...4) gemäß einem der synchronen oder plesiochronen, digitalen Hierarchie entsprechenden Kommunikationsnetz oder gemäß dem Asynchronen Transfer Modus ausgestaltet ist.

6. Verfahren nach einem der vorherigen Ansprüche,
**dadurch gekennzeichnet,**
**daß** in jeder der Anschlußeinheiten (AE1,2) Überwachungsfunktionen vorgesehen sind, durch welche mit Hilfe einer zwischen den zugeordneten Anschlußeinheiten (AE1,2) eingerichteten Kommunikationsverbindung (KV) der Ausfall des zumindest einen Teils der Steuerfunktionen (zsf1,2) in der zumindest einen Anschlußeinheit detektiert wird.

7. Verfahren nach Anspruch 6,
**dadurch gekennzeichnet,**
**daß** durch die jeweils in den Anschlußeinheiten (AE1,2) realisierten Überwachungsfunktionen das Vorhandensein der zumindest einen weiteren zugeordneten Anschlußeinheit (AE1,2) detektierbar ist.

8. Verfahren nach einem der Ansprüche 6 bis 7,
**dadurch gekennzeichnet,**
**daß** die Überwachungsfunktionen weitere Diagnosefunktionen umfassen, durch welche Fehler oder Störungen in einer zugeordneten, ausgefallenen Anschlußeinheit (AE1,2) analysierbar und optional eingrenzbar sind.

9. Kommunikationseinrichtung (KE) zur Realisierung zumindest einer ausfallsicheren Kommunikationsbeziehung (KG1,2) über ein Kommunikationsnetz (KN),
mit mehreren in der Kommunikationseinrichtung (KE) angeordneten und miteinander verbundenen Anschlusseinheiten (AE1,2) an die jeweils eine von mehreren zur Realisierung der zumindest einen Kommunikationsbeziehung (KG1,2) vorgesehen, redundanten Übertragungsleitungen (UL1...4) angeschlossen ist, wobei über eine der jeweils zur Realisierung der zumindest einen Kommunikationsbeziehung (KG1) vorgesehenen, redundanten Übertragungsleitungen (UL1) und der damit verbundnen Anschlusseinheit (AE1) kommunikationsbeziehungsspezifische Informationen übermittelt werden,
mit einer in jeder Anschlusseinheit (AE1, 2) jeweils vorgesehenen Steuereinheit (STE) zur Steuerung von zentral in der Kommunikationseinrichtung (KE) realisierten, kommunikationseinrichtungspezifischen Funktionen und von in der jeweiligen Anschlusseinheit (AE1,2) realisierten, anschlusseinheitspezifischen Funktionen (zsf1,2),
**dadurch gekennzeichnet,**
**dass** die in den miteinander verbundenen Anschlusseinheiten (AE1,2) vorgesehenen Funktionen (zsf1,2) zueinander redundant ausgeführt sind,
**dass** die Anschlusseinheiten und/oder die Steuereinheiten (STE) über eine Kommunikationsverbindung (KV) in der Art und Weise miteinander verbunden sind,
**dass** bei Ausfall zumindest eines Teils der Steuerfunktionen (zsf1,2) in einer der Anschlusseinheiten (AE1,2) zumindest die ausgefallenen kommunikationseinrichtungspezifischen und/oder anschlusseinheitspezifischen Funktionen mit Hilfe der zumindest einen über die Kommunikationsverbindung (KV) verbundenen Steuereinheit (STE) gesteuert werden, wobei die kommunikationsbeziehungsspezifische Informationen weiterhin über die eine Übertragungsletung (UL1) und der damit verbundenen Anschlusseinheit (AE1) übermittelt werden.

10. Kommunikationseinrichtung nach Anspruch 9,
**dadurch gekennzeichnet, daß** die Anschlußeinheiten (AE1,2) und/oder die Steuereinheiten (STE) über die Kommunikationsverbindung (KV) in der Art und Weise miteinander verbunden sind,
daß bei Ausfall der im Rahmen der zumindest einen Kommunikationsbeziehung (KG1,2) die Informationen übermittelnden Übertragungsleitung (UL1...4) die kommunikationsbeziehungsspezifischen Informationen über eine der zumindest einen weiteren im Rahmen dieser Kommunikationsbeziehung (KG1,2) vorgesehen, redundanten Übertragungsleitung (UL1...4) und der damit verbundenen Anschlußeinheit (AE1,2) übermittelt werden.

11. Kommunikationseinrichtung nach Anspruch 9 oder 10,
**dadurch gekennzeichnet,**
**daß** an die Anschlußeinheiten (AE1,2) jeweils mehrere Übertragungsleitungen (UL1...4) zur Realisierung von mehreren annähernd gleichzeitig geführten Kommunikationsbeziehungen (kG1,2) angeschlossen sind.

12. Kommunikationseinrichtung nach Anspruch 11,
**dadurch gekennzeichnet,**
**daß** die Anschlußeinheiten (AE1,2) und die Steuereinheiten (STE) derart ausgestaltet sind, daß bei Ausfall zumindest eines Teils der anschlußeinheitspezifischen Funktionen in einer der Anschlußeinheiten (AE1,2) und/oder bei Störungen bei der Informationsübermittlung über eine der and diese Anschlußeinheit (AE1,2) angeschlossenen Übertragungsleitungen (UL1...4) nur die bisher im Rahmen der gestörten Kommunikationsbeziehung (KG1,2) über diese Anschlußeinheit (AE1,2) und die daran angeschlossene Übertragungsleitung (UL1...4) übermittelten kommunikationsbeziehungsspezifischen Informationen über eine der zumindest einen weiteren im Rahmen dieser gestörten Kommunikationsbeziehung (KG 1,2) vorgesehenen, redundanten Übertragungsleitung (UL1...4) und der damit verbundenen Anschlußeinheit (AE 1,2) übermittelt werden.

13. Kommunikationseinrichtung nach einem der Ansprüche 9 bis 12,
**dadurch gekennzeichnet,**
**daß** in jeder der Anschlußeinheiten (AE1,2) Mittel zur Realisierung von Überwachungsfunktionen vorgesehen sind, durch welche mit Hilfe der zwischen den zugeordneten Anschlußeinheiten (AE1,2) eingerichteten Kommunikationsverbindung (KV) der Ausfall des zumindest einen Teils der Steuerfunktionen (zsf1,2) in der zumindest einen Anschlußeinheit detektiert wird.

14. Kommunikationseinrichtung nach einem der Ansprüche 9 bis 13,
**dadurch gekennzeichnet,**
**daß** in jeder der Anschlußeinheiten (AE1,2) und/oder Steuereinheiten (STE) Mittel zur Realisierung von Diagnosefunktionen vorgesehen sind, durch welche Fehler oder Störungen in einer zugeordneten, ausgefallenen Anschlußeinheit (AE1,2) analysierbar und optional eingrenzbar sind.

## Claims

1. Method for establishing at least one failsafe communication link (KG1, 2) by a communication system (KE) located in a communication network (KN),
in which a number of access units (AE1, 2) located in the communication system (KE) and assigned to one another are provided, to which in each case one of a number of redundant transmission lines (ÜL1...4) for realizing the at least one communication link (KG1, 2) is connected, in which case communication-link-specific information is transmitted over one of the redundant transmission lines (ÜL...4) and its associated access unit (AE1,2) provided to realize the at least one communication link (KG1, 2),
in which, in each of the access units (AE1, 2) control functions (zsf1, 2) are provided for controlling communication system-specific functions realized centrally in the communication system (KE) and/or access unit-specific functions realized in the relevant access units,
**characterized in that**,
the control functions (zfs1, 2) provided in the access units (AE1, 2) assigned to each other are embodied as redundant to each other,
on failure of at least a part of the control functions (zsf1, 2) in one of the access units (AE1, 2), at least the failed communication system-specific and/or access unit-specific functions are controlled by the control functions (zsf1, 2) of the at least one assigned access unit (AE1, 2), whereby the communication link-specific information will continue to be transferred via the one transmission line (ÜL1) and the access unit (AE1) connected to it.

2. Method in accordance with claim 1,
**characterized in that**,
on failure of the transmission line (ÜL1...4) transmitting the information within the framework of the at least one communication link (KG1, 2), the communication link-specific information will be transmitted over one of the at least one further redundant transmission lines (ÜL1...4) and the access unit (AE1, 2) associated with it provided within the framework of this communication link (KG1, 2).

3. Method in accordance with claim 1 or 2,
**characterized in that**,
via the access units (AE1, 2) assigned to each other and the transmission lines (ÜL1...4) connected to them the communication-link specific information will be transferred within the framework of a number of almost simultaneously realized communication links (KG1, 2).

4. Method in accordance with claim 3,
**characterized in that**,
that on failure of at least a part of the access unit-specific functions in one of the access units (AE1, 2) and/or for faults in the information transfer over one of the transmission lines (ÜL1...4) connected to these access units (AE1,2) only the communication link-specific information transferred thus far as part of the disturbed communication link (KG1,2) via this access unit (AE1,2) and the transmission lines (ÜL1...4) connected to it will be transferred via a least a further one of the redundant transmission lines (ÜL1...4) and the access units connected to it provided within the framework of this disturbed communication link (KG1,2).

5. Method in accordance with one of the previous claims,
**characterized in that**,
the communication network (KN) and the transmission lines (ÜL1...4) are embodied in accordance with a communication network corresponding to the Synchronous or Plesiochronous Digital Hierarchy or in accordance with the Asynchronous Transfer Mode.

6. Method in accordance with one of the previous claims,
**characterized in that**,
in each of the access units (AE1, 2) supervision functions are provided through which, with the aid of a communication connection (KV) established between the assigned access units (AE1, 2), the failure of at least a part of the control function (zsf1, 2) in the at least one access unit will be detected.

7. Method in accordance with claim 6,
**characterized in that**,
by the monitoring functions realized in the access unit (AE1, 2) in each case, the presence of at least one further assigned access unit (AE1, 2) is detectable.

8. Method in accordance with one of the claims 6 to 7,
**characterized in that**
the monitoring functions include further diagnosis functions through which errors or faults in an assigned, failed access unit (AE1, 2) can be analyzed and optionally pinpointed.

9. Communication system (KE) for implementing at least one fail-safe communication link (KG1, 2) over a communication network (KN),
with a number of access units (AE1, 2) arranged in the communication system (KE) and connected to each other, to which in each case one of a number of redundant transmission lines (ÜL1...4) is connected for realizing the at least one communication link (KG1,2), in which case communication link-specific information is transferred over one of the redundant transmission lines (ÜL1) and the access unit (AE1) connected to it for realizing the at least one communication link in each case.
with a control unit (STE) provided in each access unit (AE1, 2) in each case to control communication network-specific functions realized centrally in the communication system (KE) and/or access unit-specific functions (zsf1, 2) realized in the relevant access unit (AE1, 2),
**characterized in that**
the functions (zsf1, 2) provided in the access units (AE1, 2) connected to each other are embodied to be redundant to each other.
the access units and/or the control units (STE) are connected to each other via the communication connection (KV) in such a way that,
on failure of at least one part of the control functions (zsf1, 2) in one of the access units (AE1) at least the failed communication system-specific and/or access unit-specific functions are controlled with the aid of the at least one control unit (STE) connected via the communication connection (KV), whereby the communication connection-specific information continues to be transferred via the one transmission line (ÜL1) and the access unit (AE1) connected to it.

10. Communication system in accordance with claim 9,
**characterized in that**,
the access units (AE1,2) and/or the control units (STE) are connected to each other via the communication connection (KV) in such a way that,
on failure of the transmission line (ÜL1...4) transmitting the information within the framework of the at least one communication link (KG1,2), the communication link-specific information will be transmitted over one of the at least one further redundant transmission line (ÜL1...4) and the access unit (AE1, 2) associated with it provided within the framework of this communication link (KG1, 2).

11. Communication system in accordance with claim 9 or 10, or
**characterized in that**,
a number of transmission lines (ÜL1...4) for realizing a number of approximately simultaneously conducted communication links (KG1,2) are connected to the access units (AE1, 2)

12. Communication system in accordance with claim 11,
**characterized in that**,
the access units (AE1, 2) and the control units (STE) are designed so that on failure of at least a part of the access unit-specific functions in one of the access units (AE1, 2) and/or with faults during information transfer via one of the transmission lines (ÜL1...4) connected to one of these access units (AE1, 2)
only the communication link-specific information previously transferred within the framework of the disturbed communication link (KG1, 2) via this access unit (AE1, 2) and the transmission lines (ÜL1...4) connected to it will be transmitted via at least one further redundant transmission line (ÜL1...4) and the access unit connected to it (AE1, 2) provided within the framework of this disturbed communication link (KG1, 2).

13. Communication system in accordance with claims 9 to 12,
**characterized in that**,
in each of the access units (AE1, 2) means are provided for realizing monitoring functions through which with the aid of the communication connection (KV) set up between the assigned access units (AE1,2) the failure of the at least one part of the control function (zsf1, 2) in the at least one access unit will be detected.

14. Communication system in accordance with Claims 9 to 13,
**characterized in that**,
in each of the access units (AE1, 2) and/or control units (STE) means are provided for implementing diagnosis functions through which errors or faults in an assigned, failed access unit (AE1, 2) can be analyzed and optionally pinpointed.

## Revendications

1. Procédé pour réaliser au moins une relation de communication (KG1, 2) à sûreté intégrée par un dispositif de communication (KE) disposé dans un réseau de communication (KN), dans lequel plusieurs unités de raccordement (AE1, 2) disposées dans le dispositif de communication (KE) et attribuées les unes aux autres sont prévues, à chacune desquelles est raccordée une de plusieurs lignes de transmission (UL1 ... 4) redondantes, prévues pour la réalisation de l'au moins une relation de communication (KG1, 2), des informations spécifiques à la relation de communication étant transmises par l'une des lignes de transmission (UL1) redondantes, prévues respectivement pour la réalisation de l'au moins une relation de communication (KG1) et par l'unité de raccordement (AE1) reliée à cette ligne, dans lequel, dans chacune des unités de raccordement (AE1, 2), des fonctions de commande (zsf1, 2) sont prévues pour la commande de fonctions réalisées de façon centrale dans le dispositif de communication (KE) et spécifiques au dispositif de communication et de fonctions spécifiques à l'unité de raccordement et réalisées dans l'unité de raccordement respective,
**caractérisé en ce que**
les fonctions de commande (zsf1, 2) prévues dans les unités de raccordement (AE1, 2) attribuées entre elles sont exécutées de façon redondante les unes par rapport aux autres,
**en ce que**, en cas de défaillance d'au moins une partie des fonctions de commande (zsf1, 2) dans l'une des unités de raccordement (AE1), au moins les fonctions spécifiques au dispositif de communication et/ou spécifiques à l'unité de raccordement qui sont devenues défaillantes sont commandées par les fonctions de commande (zsf1, 2) de l'au moins une unité de raccordement (AE2) attribuée, les informations spécifiques à la relation de communication étant encore transmises par une ligne de transmission (UL1) et l'unité de raccordement (AE1) reliée à celle-ci.

2. Procédé selon la revendication 1,
**caractérisé en ce que**,
en cas de défaillance de la ligne de transmission (UL1...4) transmettant les informations dans le cadre de l'au moins une relation de communication (KG1, 2), les informations spécifiques à la relation de communication sont transmises par au moins une autre ligne de transmission (UL1 ... 4) redondante, prévue dans le cadre de cette relation de communication (KG1, 2) et de l'unité de raccordement (AE1, 2) reliée à l'au moins une autre ligne de transmission.

3. Procédé selon la revendication 1 ou 2,
**caractérisé en ce que**
les informations spécifiques à la relation de communication sont transmises par les unités de raccordement (AE1, 2) attribuées les unes aux autres et les lignes de transmission (UL1 ... 4) raccordées à celles-ci, dans le cadre de plusieurs liaisons de communication (KG1,2) réalisées approximativement simultanément.

4. Procédé selon la revendication 3,
**caractérisé en ce que**,
en cas de défaillance d'au moins une partie des fonctions spécifiques à l'unité de raccordement dans l'une des unités de raccordement (AE1,2) et/ou en cas de dérangements lors de la transmission d'information par l'une des lignes de transmission (UL1 ... 4) raccordées à cette unité de raccordement (AE1, 2),
seules les informations spécifiques à la relation de communication, transmises jusqu'à présent par cette unité de raccordement (AE1, 2) et par la ligne de transmission (UL1 ... 4) raccordée à celle-ci dans le cadre de la relation de communication (KG1, 2) dérangée sont transmises par une de l'au moins une autre ligne de transmission (UL1 ... 4) redondante, prévue dans le cadre de cette relation de communication (KG1, 2) dérangée et par l'unité de raccordement (AE1, 2) reliée à celle-ci.

5. Procédé selon l'une quelconque des revendications précédentes,
**caractérisé en ce que**
le réseau de communication (KN) et les lignes de transmission (UL1 ... 4) sont conçus selon un réseau de communication correspondant à la hiérarchie numérique, synchrone ou plésiochrone ou selon le mode de transfert asynchrone.

6. Procédé selon l'une quelconque des revendications précédentes,
**caractérisé en ce que**
dans chacune des unités de raccordement (AE1, 2) sont prévues des fonctions de surveillance par lesquelles, à l'aide d'une liaison de communication (KV) aménagée entre les unités de raccordement (AE1, 2) attribuées, la défaillance de l'au moins une partie des fonctions de commande (zsf1, 2) est détectée dans l'au moins une unité de raccordement.

7. Procédé selon la revendication 6,
**caractérisé en ce que**,
la présence de l'au moins une autre unité de raccordement (AE1, 2) attribuée peut être détectée par les fonctions de surveillance réalisées respectivement dans les unités de raccordement (AE1, 2).

8. Procédé selon l'une quelconque des revendications 6 à 7,
**caractérisé en ce que**
les fonctions de surveillance comprennent d'autres fonctions de diagnostic, par lesquelles des défauts ou des dérangements peuvent être analysés et, optionnellement limités dans une unité de raccordement (AE1, 2) défaillante et attribuée.

9. Dispositif de communication (KE) pour la réalisation d'au moins une relation de communication (KG1, 2) à sûreté intégrée par un réseau de communication (KN),
comprenant plusieurs unités de raccordement (AE1, 2) disposées dans le dispositif de communication (KE) et reliées entre elles à chacune desquelles est raccordée une de plusieurs lignes de transmission (UL1...4) redondantes, prévues pour la réalisation de l'au moins une relation de communication (KG1, 2), des informations spécifiques à la relation de communication étant transmises par l'une des lignes de transmission (UL1...4) redondantes, prévues respectivement pour la réalisation de l'au moins une relation de communication (KG1), par des unités de raccordement (AE1, 2) reliées à celle-ci,
comprenant une unité de commande (STE) prévue respectivement dans chaque unité de raccordement (AE1, 2) pour la commande de fonctions spécifiques au dispositif de communication, réalisées de façon centrale dans le dispositif de communication (KE) et de fonctions (zsf1, 2) spécifiques à l'unité de raccordement et réalisées dans l'unité de raccordement (AE1,2) respective, **caractérisé en ce que** les fonctions (zsf1, 2) prévues dans les unités de raccordement (AE1,2) reliées entre elles sont réalisées de façon redondante entre elles,
**en ce que** les unités de raccordement et/ou les unités de commande (STE) sont reliées par une liaison de communication (KV) de telle sorte que
en cas de défaillance d'au moins une partie des fonctions de commande (zsf1, 2) dans l'une des unités de raccordement (AE1), au moins les fonctions défaillantes, spécifiques à l'unité de communication et/ou à l'unité de raccordement sont commandées à l'aide de l'au moins une unité de commande (STE) reliée par la liaison de communication (KV), les informations spécifiques à la relation de communication étant encore transmises par la ligne de transmission (UL1) et l'unité de raccordement (AE1) reliée à celle-ci.

10. Dispositif de communication selon la revendication 9,
**caractérisé en ce que** les unités de raccordement (AE1, 2) et/ou les unités de commande (STE) sont reliées par la liaison de communication (KV) entre elles de telle sorte que,
en cas de défaillance de la ligne de transmission (UL1...4) transmettant les informations dans le cadre de l'au moins une relation de communication (KG1, 2), les informations spécifiques à la relation de communication sont transmises par l'une des au moins une autre ligne de transmission (UL1...4) redondante, prévue dans le cadre de cette relation de communication (KG1, 2) et par l'unité de raccordement (AE1, 2) reliée.

11. Dispositif de communication selon la revendication 9 ou 10, **caractérisé en ce que**
à chacune des unités de raccordement (AE1, 2) sont raccordés respectivement plusieurs lignes de transmission (UL1...4) pour la réalisation de plusieurs liaisons de communication (KG1, 2) menées approximativement de façon simultanée.

12. Dispositif de communication selon la revendication 11, **caractérisé en ce que**,
les unités de raccordement (AE1, 2) et les unités de commande (STE) sont conçues de telle sorte que
en cas de défaillance d'au moins une partie des fonctions spécifiques à l'unité de raccordement dans l'une des unités de raccordement (AE1, 2) et/ou en cas de dérangements lors de la transmission d'information par l'une des lignes de transmission (UL1...4) raccordées à cette unité de raccordement (AE1, 2), seules les informations spécifiques à la relation de communication transmises jusqu'à présent par cette unité de raccordement (AE1, 2) et la ligne de transmission (UL1...4) raccordée à celle-ci dans le cadre de la relation de communication (KG1, 2) dérangée sont transmises par une des au moins une autre ligne de transmission (UL1...4) redondante, prévue dans le cadre de cette relation de communication (KG1, 2) dérangée et de l'unité de raccordement (AE1, 2) reliée à celle-ci.

13. Dispositif de communication selon l'une quelconque des revendications 9 à 12, **caractérisé en ce que**,
dans chacune des unités de raccordement (AE1, 2), des moyens pour la réalisation des fonctions de surveillance sont prévues, par lesquelles la défaillance de l'au moins une partie des fonctions de commande (zsf1, 2) dans l'au moins une unité de raccordement est détectée à l'aide de la liaison de communication (KV) établie entre les unités de raccordement (AE1, 2) attribuées.

14. Dispositif de communication selon l'une quelconque des revendications 9 à 13, **caractérisée en ce que**,
dans chacune des unités de raccordement (AE1, 2) et/ou unités de commande (STE), il est prévu des moyens pour la réalisation de fonctions de diagnostic par lesquelles des défauts ou des dérangements dans une unité de raccordement (AE1, 2) attribuée et défaillante peuvent être analysés et, optionnellement limités.
